# EUROPEAN PATENT SPECIFICATION

(11) **EP 3 625 867 B1**
(45) Date of publication and mention of the grant of the patent: **14.07.2021**
(21) Application number: 17724807.7
(22) Date of filing: 18.05.2017
(51) Int. Cl.: H02J 3/36

(54) **DETERMINING SETPOINT PARAMETERS FOR CONTROLLING AN HVDC LINK**
BESTIMMUNG VON SOLLWERTPARAMETERN ZUR STEUERUNG EINER HVDC-VERBINDUNG
DÉTERMINATION DE PARAMÈTRES DE CONSIGNE POUR LA COMMANDE D'UNE LIAISON COURANT CONTINU HAUTE TENSION

(43) Date of publication of application: 25.03.2020
(73) Proprietor: ABB Power Grids Switzerland AG, 5400 Baden (CH)
(72) Inventor: BERGGREN, Bertil, 722 10 Västerås (SE); ZHANG, Lidong, 724 76 Västerås (SE); LARSSON, Mats, 5102 Rupperswill (CH)
(74) Representative: AWA Sweden AB
(86) International application number: PCT/EP2017/061992
(87) International publication number: WO 2018/210424

(56) References cited:
- TO K W V ET AL: "MULTIVARIABLE ADAPTIVE CONTROL OF AC-DC SYSTEMS", IEE PROCEEDINGS: GENERATION, TRANSMISSION AND DISTRIBUTION, INSTITUTION OF ELECTRICAL ENGINEERS, GB, vol. 141, no. 6, PART C, 1 November 1994 (1994-11-01), pages 658-664, XP000480847, ISSN: 1350-2360, DOI: 10.1049/IP-GTD:19941481
- HAMMAD A E: "Stability and Control of HVDC and AC Transmissions in Parallel", IEEE TRANSACTIONS ON POWER DELIVERY, IEEE SERVICE CENTER, NEW YORK, NY, US, vol. 14, no. 4, 1 October 1999 (1999-10-01), pages 1545-1554, XP011089198, ISSN: 0885-8977, DOI: 10.1109/61.796252

## Description

### TECHNICAL FIELD

The invention relates to a method, a setpoint determiner, a computer program and a computer program product for determining setpoint parameters for controlling a high voltage direct current (HVDC) link provided in parallel with a transmission corridor of at least one alternating current (AC) line.

### BACKGROUND

Current installations of transmission corridors between interconnected power systems or within countrywide transmission systems are limited in terms of network performance. Transfer limits due to voltage stability limits are most often based on off-line calculation, and must therefore be conservative enough to accommodate all credible operating conditions. At the same time, phasor measurements units are becoming an increasingly accepted and available technology. Often, voltage instability evolves into breakup of a power system in a few minutes, or even seconds if fast load dynamics are involved. This is faster than an operator can be expected to react to unplanned events such as line outages or generator trips through manual intervention.

One attractive solution to increase capacity in a transmission system is to install HVDC in parallel to an existing AC transmission system.

Conventional control aims to establish setpoint tracking in the sense that actual power injected at a point of common coupling (PCC) should agree with a setpoint in active power. Normally, setpoints for HVDC terminals are kept constant or changed manually on a slow time-scale based on variations in generation, load or optimal power-flow calculations. The performance objectives of the controllers do not consider their effect on the power system as a whole. Operator intervention to change the setpoints are rare, and can only take place on a slow time scale due to the need for an operator to properly identify the need for actions. Often voltage instability evolves into breakup of a power system in a few minutes, or even seconds if fast load dynamics are involved. This is faster than an operator can be expected to react to unplanned events such as line outages or generator trips.

KR20 160032348 discloses a real-time power stabilization apparatus of an HVDC system. The real-time power stabilization apparatus comprises: a real-time stability analyzer which calculates and outputs a DC (Direct Current) current variation amount, a DC power variation amount, and a voltage stability index on the basis of valid power, invalid power, DC current, and AC system information; and a stabilization controller which confirms the stability condition of voltage and power on the basis of the output of the real-time stability analyzer to change a sign of an instruction value of current.

'Multivariable adaptive control of AC-DC systems' by K.W.V. To and A.K. David (IEE Proceeding 'Generation, Transmission and Distribution', November 1994) discloses a method of controlling a parallel HVDC-AC link using a system model to calculate the setpoints. It uses the rapid response of the DC-line converters to damp oscillations in the AC system.

### SUMMARY

It is an object to provide a control system for an HVDC link provided in parallel with a transmission corridor, which is efficient and responsive.

According to a first aspect, it is presented a method for determining setpoint parameters for controlling a high voltage direct current (HVDC) link provided in parallel with a transmission corridor comprising at least one alternating current (AC) line. The method is performed in a setpoint determiner and comprises the steps of: obtaining a first set of measurements of a first end of the transmission corridor; obtaining a second set of measurements of a second end of the transmission corridor; determining which one of a first area, connected to the first end of the transmission corridor, and a second area, connected to the second end of the transmission corridor, that has a deficit of active power and which one of the first area and the second area of the transmission corridor that has a surplus of active power; determining a model equivalent, based on a corridor equivalent of the transmission corridor and a generator equivalent of the area operating predominately as a generator; and determining setpoint parameters for the HVDC link based on the model equivalent.

The step of determining setpoint parameters may comprise optimising a function f(p, x, u), subject to g(p, x, u) = 0 and h(p, x, u) ≤ 0, where g represents constraints given by the T model and a steady state response of the HVDC link, h represents operational limits of the HVDC link, x represents state variables of the model, u represents the setpoint parameters, and p represents a simulated load variation.

The step of determining setpoint parameters may comprise simulating a line trip in the transmission corridor.

The step of determining setpoint parameters comprises deriving an operating point function of the transmission corridor, describing the relationship between voltage and power transfer, in which case the setpoint parameters are determined based on a power margin between a power transfer value of a current operating point and a maximum power transfer value.

The setpoint parameters may comprise an active power transfer value and a reactive power transfer value.

The corridor equivalent may be a T equivalent, an ABCD equivalent or a PI equivalent.

The generator equivalent may be a Thevenin equivalent or a Norton equivalent.

According to a second aspect, it is presented a setpoint determiner for determining setpoint parameters for controlling a high voltage direct current link provided in parallel with a transmission corridor comprising at least one alternating current line. The setpoint determiner comprises: a processor; and a memory storing instructions that, when executed by the processor, cause the setpoint determiner to: obtain a first set of measurements of a first end of the transmission corridor; obtain a second set of measurements of a second end of the transmission corridor; determine which one of a first area, connected to the first end of the transmission corridor, and a second area, connected to the second end of the transmission corridor, that has a deficit of active power and which one of the first area and the second area of the transmission corridor that has a surplus of active power; determine a model equivalent, based on a corridor equivalent of the transmission corridor and a generator equivalent of the area operating predominately as a generator; and determine setpoint parameters for the HVDC link based on the model equivalent.

The instructions to determine setpoint parameters may comprise instructions that, when executed by the processor, cause the setpoint determiner to optimise a function f(p, x, u), subject to g(p, x, u) = 0 and h(p, x, u) ≤ 0, where g represents constraints given by the T model and a steady state response of the HVDC link, h represents operational limits of the HVDC link, x represents state variables of the model, u represents the setpoint parameters, and p represents a simulated load variation.

The instructions to determine setpoint parameters may comprise instructions that, when executed by the processor, cause the setpoint determiner to simulate a line trip in the transmission corridor.

The instructions to determine setpoint parameters comprises instructions that, when executed by the processor, cause the setpoint determiner to derive an operating point function of the transmission corridor, describing the relationship between voltage and power transfer, in which case the setpoint parameters are determined based on a power margin between a power transfer value of a current operating point and a maximum power transfer value.

The setpoint parameters may comprise an active power transfer value and a reactive power transfer value.

The corridor equivalent may be a T equivalent, an ABCD equivalent or a PI equivalent.

The generator equivalent may be a Thevenin equivalent or a Norton equivalent.

According to a third aspect, it is presented a computer program for determining setpoint parameters for controlling a high voltage direct current link provided in parallel with a transmission corridor comprising at least one alternating current line. The computer program comprising computer program code which, when run on a setpoint determiner causes the setpoint determiner to: obtain a first set of measurements of a first end of the transmission corridor; obtain a second set of measurements of a second end of the transmission corridor; determine which one of a first area, connected to the first end of the transmission corridor, and a second area, connected to the second end of the transmission corridor, that has a deficit of active power and which one of the first area and the second area of the transmission corridor that has a surplus of active power; determine a model equivalent, based on a corridor equivalent of the transmission corridor and a generator equivalent of the area operating predominately as a generator; and determine setpoint parameters for the HVDC link based on the model equivalent.

According to a fourth aspect, it is presented a computer program product comprising a computer program according to the third aspect and a computer readable means on which the computer program is stored.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated.

### BRIEF DESCRIPTION OF THE DRAWINGS

The invention is now described, by way of example, with reference to the accompanying drawings, in which:
Fig 1 is a schematic drawing illustrating an environment in which embodiments presented herein can be applied;
Fig 2 is a schematic drawings illustrating corridor and generator equivalents of the transmission corridor and areas of Fig 1;
Fig 3 is a schematic graph illustrating operating points of the transmission corridor of Fig 1 according to one embodiment;
Fig 4 is a flow chart illustrating embodiments of methods for determining setpoint parameters for controlling the HVDC link in Fig 1;
Fig 5 is a schematic diagram illustrating components of the setpoint determiner of Fig 1; and
Fig 6 shows one example of a computer program product comprising computer readable means.

### DETAILED DESCRIPTION

The invention will now be described more fully hereinafter with reference to the accompanying drawings, in which certain embodiments of the invention are shown. This invention may, however, be embodied in many different forms and should not be construed as limited to the embodiments set forth herein; rather, these embodiments are provided by way of example so that this disclosure will be thorough and complete, and will fully convey the scope of the invention to those skilled in the art. Like numbers refer to like elements throughout the description.

Embodiments presented herein relate to dynamic determination of setpoint parameters for the HVDC link in a system where the HVDC link is provided in parallel with an AC transmission corridor. Specifically, the determination is based on equivalent models of the AC side of the system, rather than a detailed actual topology. This improves efficiency in calculations, allowing for quick calculation times to provide a fast response to changing conditions, e.g. voltage instabilities, which mitigates and reduces propagation of problems in the transmission network.

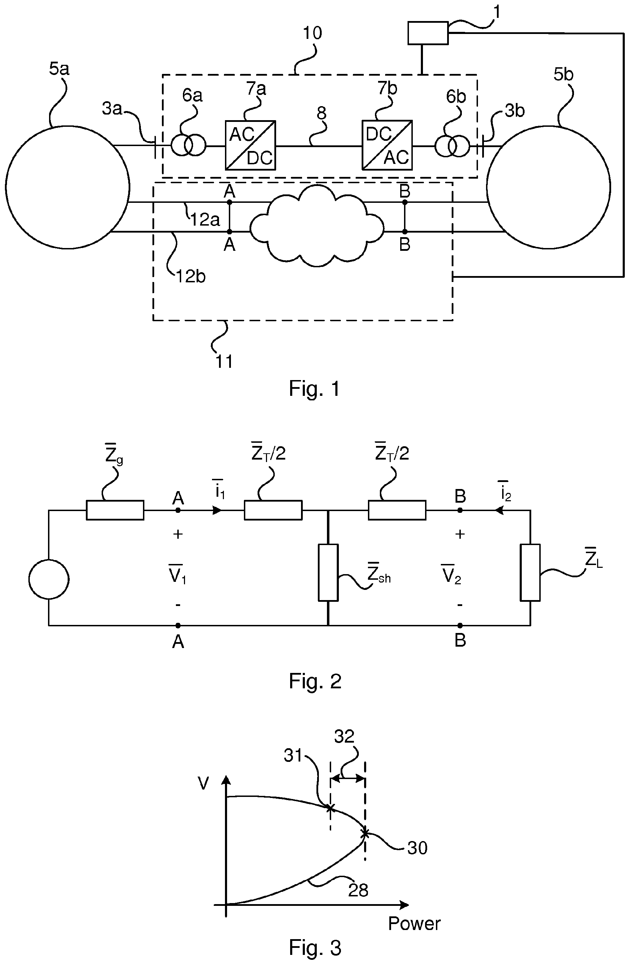

Fig 1 is a schematic drawing illustrating an environment in which embodiments presented herein can be applied. There is here a first area 5a and a second area 5b. One area acts predominately as a generator and the other area acts predominately as a load. In this example, the first area 5a is a generator area and the second area 5b is a load area. There is a transmission corridor 11 provided between the two areas 5a-b to transfer power from the first area 5a to the second area 5b. The transmission corridor 11 comprises at least one AC (Alternating Current) line. In this example, the transmission corridor comprises a first AC line 12a and a second AC line 12b.

In parallel to the transmission corridor 11, there is a HVDC (High Voltage Direct Current) link 10. The HVDC link 10 comprises a first PCC (Point of Common Coupling) 3a for connecting with the first area 5a and a second PCC 3b for connecting with the second area 5b. Both PCCs 3a-b are AC connection points. After the first PCC 3a, there is an optional first transformer 6a which can transform the voltage and provide galvanic decoupling. A first converter station 7a, is connected to the first transformer 6a to transform the AC to HVDC, which is supplied on an HVDC transmission line 8. The other side works in reverse, whereby a second converter station 7b receives HVDC power from the HVDC transmission line 8 and converts the power to AC. A second transformer 6b is optionally provided between the second converter station 7b and the second PCC 3b for providing power to the second area 5b.

The HVDC link 10 can be controlled both in terms of active and reactive power at the PCCs 3a-b. For instance, each side of the HVDC link 10 can be set up to control on one hand either active power injected at the PCC or DC voltage, or on the other hand AC voltage at PCC or reactive power injected at PCC. One useful configuration is when one converter (i.e. on one side of the HVDC link) controls DC voltage and AC voltage or reactive power whereas the other converter (i.e. on the other side of the HVDC link) controls active power and AC voltage or reactive power.

A setpoint determiner 1 is connected to the HVDC link 10 and the transmission corridor 11 to determine setpoints of the HVDC link 10 as explained in more detail below.

Fig 2 is a schematic drawing illustrating corridor and generator equivalents of the transmission corridor and areas of Fig 1. In this embodiment, the corridor equivalent is a T equivalent and the generator equivalent is a Thevenin equivalent. Sections A-A and B-B are equivalent points in Fig 1 and Fig 2.

The voltage across section A-Ais denoted *v̅*₁ and the voltage across section B-B is denoted *v̅*₂. Between section A-Aand section B-B, a corridor equivalent in the form of a T equivalent 35 is derived which represents the transmission corridor. On the left of section A-A, a generator equivalent in the form of a Thevenin equivalent 36 representing the first area 5a is derived. To the right of section B-B, a load *Z̅_{L}* representing area 2 is derived.

Between A-A and B-B is an area with no or little generation equipment and only a few minor loads. This is the transmission corridor, whose stability is of interest. In the procedure determining the corridor equivalent, these loads will be implicitly included in a shunt impedance *Z̅ₛₕ*. The serial impedances are each represented by *Z̅_{T}*/2. Current going in towards *Z̅ₛₕ* from A-A is represented by 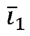 and current going in towards *Z̅ₛₕ* from B-B is represented by *i̅*₂.

For the generator equivalent, the generation is represented by a generator *E̅_{g}* and a generator impedance *Z̅_{g}*, and on the load side, the load is represented by *Z̅_{L}*.

After identifying the transmission corridor boundaries A-A and B-B, we can define two virtual buses, one for each end of the transmission corridor. The virtual buses are non-physical buses which each represent a simplification of multiple physical buses. Given a single snapshot of synchronized phasor measurements on all lines intersecting A-A and B-B, the parameters of the equivalents in Fig 2 can be uniquely computed. Various options exist to compute the virtual phasors (*i̅*₁, *i̅*₂*, v̅*₁, *v̅*₂), the simplest being averaging the voltages on each line and summing the currents.

It is to be noted that the corridor equivalent could be replaced by any suitable equivalent, e.g. a PI-equivalent or an ABCD equivalent. It is to be noted that the generator equivalent could be replaced by any suitable equivalent, e.g. a Norton equivalent.

Fig 3 is a schematic graph illustrating operating points of the transmission corridor of Fig 1 according to one embodiment. The horizontal axis represents power transfer across the transmission corridor, at the receiving end. The vertical axis represents the voltage *v̅*₂ at the receiving end of the transmission corridor. The line 28 in Fig 3 represents possible operating points of the transmission corridor.

As seen in Fig 3, there is maximum power transfer at a maximum operating point 30. In relation to a current operating point 31, a power margin 32 can be calculated as the difference in power transfer between the maximum operating point 30 and the current operating point 31.

More specifically, the calculation yields the current operating point 31 for a current active power transfer *Pᵢ* at the receiving end of the transmission corridor and the maximum operating point 30 for maximum power transfer *Pᵢ^{max}* at the receiving end of the transmission corridor.

A heuristic feedback scheme is then introduced from the power margin *P_{margin}*=*Pᵢ^{max}-Pᵢ.* The objective is to reduce load on the AC part of the transmission corridor, when the power margin is detected to be less than a threshold value, by increasing the active power setpoint of the active power controlling converter station of the HVDC link. If short term overload capability of the converter station is available, this adjusted active power setpoint could be higher than its nominal active power rating. This feedback control scheme could have many forms and be implemented using state machines, PI (Proportional Integral) controllers or variants therefor. As an example, pseudocode in Modelica of an I (Integral) controller with limiter is shown here:

```
    model RedispatchLogic_new_docu
         extends Modelica.Blocks.Icons.Block;
     input Real Plmargin;
     output Real dPref;
     output Real dQref;
       parameter Real Pmarg_min=1;
       parameter Real Pmarg_max=1.2;
       parameter Real Tr=5;
    parameter Real dPmax=3;
    parameter Real Pmax=7.98,Qmax=3.98;
       Boolean ramp_up;
       Boolean ramp_down;
       Real ramp_rate;
     equation
       ramp_up = Plmargin < Pmarg_min;
       ramp_down = Plmargin > Pmarg_max;
       if ramp_up and dPref < dPmax then
         ramp_rate = 1/Tr;
       elseif ramp_down and dPref > 0 then
         ramp_rate = -1/Tr;
       else
         ramp_rate = 0;
       end if;
       der(dPref) = ramp_rate;
       dQref = dPref*Qmax/Pmax;
     initial equation
       dPref = 0;
    end RedispatchLogic_new_docu;
```

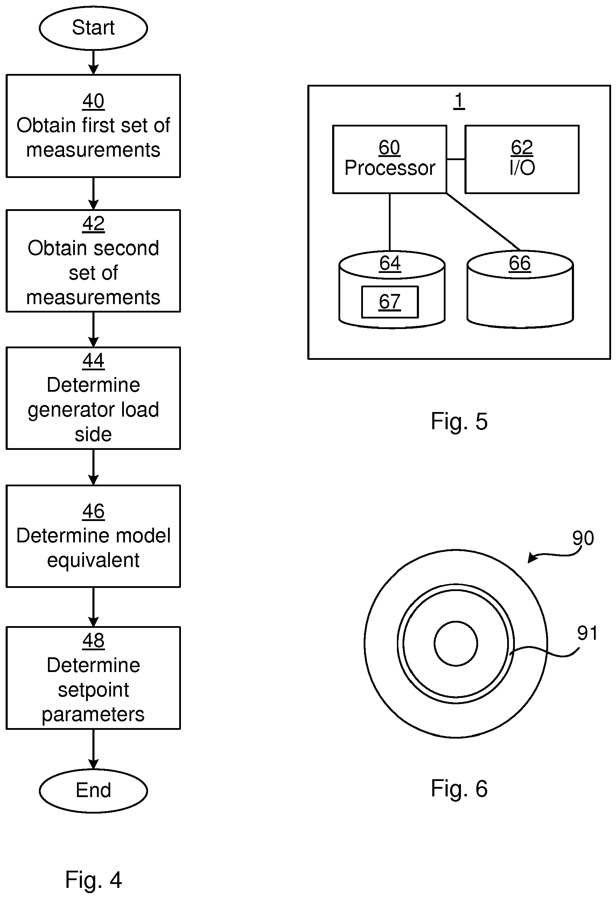

Fig 4 is a flow chart illustrating embodiments of methods for determining setpoint parameters for controlling the HVDC link in Fig 1. The method is performed in the setpoint determiner 1.

In an *obtain first set of measurements* step 40, the setpoint determiner obtains a first set of measurements of a first end of the transmission corridor. For instance, the first set of measurements can include *i̅*₁ and *v̅*₁.

In an *obtain second set of measurements* step 42, the setpoint determiner obtains a second set of measurements of a second end of the transmission corridor. For instance, the first set of measurements can include *i̅*₂ and *v̅*₂.

In a *determine generator*/*load side* step 44, the setpoint determiner determines which one of a first area and a second area that has a deficit of active power (i.e. predominately operates as a load) and which one of the first area and the second area of the transmission corridor that has a surplus of active power (i.e. predominately operates as a generator). The first area is connected to the first end of the transmission corridor and the second area is connected to the second end of the transmission corridor.

In a *determine model equivalent* step 46, the setpoint determiner determines a model equivalent, based on a corridor equivalent of the transmission corridor and a generator equivalent of the area operating predominately as a generator. See Fig 2 and corresponding text above. The corridor equivalent can e.g. be a T equivalent, an ABCD equivalent or a PI equivalent.

The generator equivalent can e.g. be a Thevenin equivalent or a Norton equivalent.

In a *determine setpoint parameters* step 48, the setpoint determiner determines setpoint parameters for the HVDC link based on the model equivalent. The setpoint parameters may comprise an active power transfer value and a reactive power transfer value for the HVDC link. The active power transfer value and reactive transfer value can be applied for different ends of the HVDC link.

In one embodiment, the setpoint parameters comprises optimising a function *f(p, x, u),* subject to *g(p, x, u)* = *0* and *h(p, x, u)* ≤ *0*, where g represents constraints given by the T model and a steady state response of the HVDC link, *h* represents operational limits of the HVDC link, *x* represents state variables of the model, *u* represents the setpoint parameters, and *p* represents a simulated load variation.

Optionally, the optimising comprises simulating a line trip in the transmission corridor.

In one embodiment, this step 48 comprises deriving an operating point function of the transmission corridor, describing the relationship between voltage and power transfer, e.g. as shown in Fig 3. In such a case, the setpoint parameters are determined based on a power margin between a power transfer value of a current operating point and a maximum power transfer value. For instance, if the power margin is low (less than a threshold value), then (active) power transfer over the HVDC link is increased, to thereby increase the power margin of the transmission corridor.

Using this method, the setpoint determination can be made completely independently of grid parameter and switching status knowledge. Detailed parameter data is only used by the HVDC converter stations and the HVDC link. The approximation of the transmission corridor has been found to be good as long as the amount of load and generation inside the AC part of the corridor is small and the electrical distances between the sections (A-Aand B-B of Fig 2) used to define the model are small.

Fig 5 is a schematic diagram illustrating components of the setpoint determiner of Fig 1. A processor 60 is provided using any combination of one or more of a suitable central processing unit (CPU), multiprocessor, microcontroller, digital signal processor (DSP), application specific integrated circuit etc., capable of executing software instructions 67 stored in a memory 64, which can thus be a computer program product. The processor 60 can be configured to execute the method described with reference to Fig 4 above.

The memory 64 can be any combination of random access memory (RAM) and read only memory (ROM). The memory 64 also comprises persistent storage, which, for example, can be any single one or combination of magnetic memory, optical memory, solid-state memory or even remotely mounted memory.

A data memory 66 is also provided for reading and/ or storing data during execution of software instructions in the processor 60. The data memory 66 can be any combination of random access memory (RAM) and read only memory (ROM).

The setpoint determiner 1 further comprises an I/O interface 62 for communicating with other external entities. For instance, measurements are received over the I/O interface 62.

Other components of the setpoint determiner 1 are omitted in order not to obscure the concepts presented herein.

Fig 6 shows one example of a computer program product comprising computer readable means. On this computer readable means, a computer program 91 can be stored, which computer program can cause a processor to execute a method according to embodiments described herein. In this example, the computer program product is an optical disc, such as a CD (compact disc) or a DVD (digital versatile disc) or a Blu-Ray disc. As explained above, the computer program product could also be embodied in a memory of a device, such as the computer program product 67 of Fig 5. While the computer program 91 is here schematically shown as a track on the depicted optical disk, the computer program can be stored in any way which is suitable for the computer program product, such as a removable solid state memory, e.g. a Universal Serial Bus (USB) drive.

The invention has mainly been described above with reference to a few embodiments. However, as is readily appreciated by a person skilled in the art, other embodiments than the ones disclosed above are equally possible within the scope of the invention, as defined by the appended patent claims.

## Claims

1. A method for determining setpoint parameters for controlling a high voltage direct current, HVDC, link (10) provided in parallel with a transmission corridor (11) comprising at least one alternating current, AC, line (12a-b), the method being performed in a setpoint determiner (1) and comprising the steps of:
obtaining (40) a first set of measurements of a first end of the transmission corridor;
obtaining (42) a second set of measurements of a second end of the transmission corridor;
determining (44) which one of a first area, connected to the first end of the transmission corridor, and a second area, connected to the second end of the transmission corridor, that has a deficit of active power and which one of the first area and the second area of the transmission corridor that has a surplus of active power ;
determining (46) a model equivalent, based on a corridor equivalent of the transmission corridor and a generator equivalent of the area operating predominately as a generator; and
determining (48) setpoint parameters for the HVDC link (10) based on the model equivalent, which comprises deriving an operating point function of the transmission corridor, describing the relationship between voltage and power transfer, and wherein the setpoint parameters are determined based on a power margin between a power transfer value of a current operating point and a maximum power transfer value.

2. The method according to claim 1, wherein the step of determining (48) setpoint parameters comprises optimising a function *f*(*p*, *x, u),* subject to *g(p, x, u)* = *0* and *h(p, x, u)* ≤ *0*, where *g* represents constraints given by the T model and a steady state response of the HVDC link, *h* represents operational limits of the HVDC link, *x* represents state variables of the model, *u* represents the setpoint parameters, and *p* represents a simulated load variation.

3. The method according to claim 2, wherein the step of determining (48) setpoint parameters comprises simulating a line trip in the transmission corridor (11).

4. The method according to any one of the preceding claims, wherein the setpoint parameters comprise an active power transfer value and a reactive power transfer value.

5. The method according to any one of the preceding claims, wherein the corridor equivalent is a T equivalent, an ABCD equivalent or a PI equivalent.

6. The method according to any one of the preceding claims, wherein the generator equivalent is a Thevenin equivalent or a Norton equivalent.

7. A setpoint determiner (1) for determining setpoint parameters for controlling a high voltage direct current, HVDC, link (10) provided in parallel with a transmission corridor (11) comprising at least one alternating current, AC, line (12a-b), the setpoint determiner (1) comprising:
a processor (60); and
a memory (64) storing instructions (67) that, when executed by the processor, cause the setpoint determiner (1) to:
obtain a first set of measurements of a first end of the transmission corridor;
obtain a second set of measurements of a second end of the transmission corridor;
determine which one of a first area, connected to the first end of the transmission corridor, and a second area, connected to the second end of the transmission corridor, that has a deficit of active power and which one of the first area and the second area of the transmission corridor that has a surplus of active power;
determine a model equivalent, based on a corridor equivalent of the transmission corridor and a generator equivalent of the area operating predominately as a generator; and
determine setpoint parameters for the HVDC link (10) based on the model equivalent, which comprises to derive an operating point function of the transmission corridor, describing the relationship between voltage and power transfer, and wherein the setpoint parameters are determined based on a power margin between a power transfer value of a current operating point and a maximum power transfer value.

8. The setpoint determiner (1) according to claim 7, wherein the instructions to determine setpoint parameters comprise instructions (67) that, when executed by the processor, cause the setpoint determiner (1) to optimise a function *f*(*p*, *x, u),* subject to *g(p, x, u)* = *0* and *h(p, x, u)* ≤ *0*, where *g* represents constraints given by the T model and a steady state response of the HVDC link, *h* represents operational limits of the HVDC link, *x* represents state variables of the model, *u* represents the setpoint parameters, and *p* represents a simulated load variation.

9. The setpoint determiner (1) according to claim 8, wherein the instructions to determine setpoint parameters comprise instructions (67) that, when executed by the processor, cause the setpoint determiner (1) to simulate a line trip in the transmission corridor (11).

10. The setpoint determiner (1) according to any one of claims 7 to 9, wherein the setpoint parameters comprise an active power transfer value and a reactive power transfer value.

11. The setpoint determiner (1) according to any one of claims 7 to 10, wherein the corridor equivalent is a T equivalent, an ABCD equivalent or a PI equivalent.

12. The setpoint determiner (1) according to any one of claims 7 to 11, wherein the generator equivalent is a Thevenin equivalent or a Norton equivalent.

13. A computer program (67, 91) for determining setpoint parameters for controlling a high voltage direct current, HVDC, link (10) provided in parallel with a transmission corridor (11) comprising at least one alternating current, AC, line (12a-b), the computer program comprising computer program code which, when run on a setpoint determiner (1) causes the setpoint determiner (1) to:
obtain a first set of measurements of a first end of the transmission corridor;
obtain a second set of measurements of a second end of the transmission corridor;
determine which one of a first area, connected to the first end of the transmission corridor, and a second area, connected to the second end of the transmission corridor, that has a deficit of active power and which one of the first area and the second area of the transmission corridor that has a surplus of active power;
determine a model equivalent, based on a corridor equivalent of the transmission corridor and a generator equivalent of the area operating predominately as a generator; and
determine setpoint parameters for the HVDC link (10) based on the model equivalent, which comprises to derive an operating point function of the transmission corridor, describing the relationship between voltage and power transfer, and wherein the setpoint parameters are determined based on a power margin between a power transfer value of a current operating point and a maximum power transfer value.

14. A computer program product (64, 90) comprising a computer program according to claim 13 and a computer readable means on which the computer program is stored.

## Patentansprüche

1. Verfahren zum Bestimmen von Sollwertparametern zum Steuern einer Hochspannungsgleichstromverbindung, HVDC-Verbindung, (10), die parallel mit einem Übertragungskorridor (11), der mindestens eine Wechselstromleitung, AC-Leitung, (12a-b) umfasst, vorgesehen ist, wobei das Verfahren in einer Sollwertbestimmungseinrichtung (1) durchgeführt wird und die folgenden Schritte umfasst:
Erhalten (40) eines ersten Satzes von Messwerten eines ersten Endes des Übertragungskorridors;
Erhalten (42) eines zweiten Satzes von Messwerten eines zweiten Endes des Übertragungskorridors;
Bestimmen (44) desjenigen eines ersten Bereichs, der mit dem ersten Ende des Übertragungskorridors verbunden ist, und eines zweiten Bereichs, der mit dem zweiten Ende des Übertragungskorridors verbunden ist, der einen Wirkleistungsmangel aufweist, und desjenigen des ersten Bereichs und des zweiten Bereichs des Übertragungskorridors, der einen Wirkleistungsüberschuss aufweist;
Bestimmen (46) eines Modellersatzschaltbilds auf der Grundlage eines Korridorersatzschaltbilds des Übertragungskorridors und eines Generatorersatzschaltbilds des Bereichs, der überwiegend als ein Generator arbeitet; und
Bestimmen (48) von Sollwertparametern für die HVDC-Verbindung (10) auf der Grundlage des Modellersatzschaltbilds, was ein Herleiten einer Arbeitspunktfunktion des Übertragungskorridors, die die Beziehung zwischen Spannungs- und Leistungsübertragung beschreibt, umfasst, wobei die Sollwertparameter auf der Grundlage einer Leistungsmarge zwischen einem Leistungsübertragungswert eines aktuellen Arbeitspunkts und einem maximalen Leistungsübertragungswert bestimmt werden.

2. Verfahren nach Anspruch 1, wobei der Schritt des Bestimmens (48) von Sollwertparametern ein Optimieren einer Funktion *f(p,x,u),* die *g(p,x,u)* = *0* und *h(p,x,u)* ≤ *0 unterliegt,* umfasst, wobei g durch das T-Modell gegebene Abhängigkeiten und eine Beharrungszustandsantwort der HVDC-Verbindung repräsentiert, *h* Betriebsgrenzen der HVDC-Verbindung repräsentiert, *x* Zustandsvariablen des Modells repräsentiert, *u* die Sollwertparameter repräsentiert und *p* eine simulierte Lastschwankung repräsentiert.

3. Verfahren nach Anspruch 2, wobei der Schritt des Bestimmens (48) von Sollwertparametern ein Simulieren einer Leitungsstrecke im Übertragungskorridor (11) umfasst.

4. Verfahren nach einem der vorhergehenden Ansprüche, wobei die Sollwertparameter einen Wirkleistungsübertragungswert und einen Blindleistungsübertragungswert umfassen.

5. Verfahren nach einem der vorhergehenden Ansprüche, wobei das Korridorersatzschaltbild ein T-Ersatzschaltbild, ein ABCD-Ersatzschaltbild oder ein PI-Ersatzschaltbild ist.

6. Verfahren nach einem der vorhergehenden Ansprüche, wobei das Generatorersatzschaltbild ein Thevenin-Ersatzschaltbild oder ein Norton-Ersatzschaltbild ist.

7. Sollwertbestimmungseinrichtung (1) zum Bestimmen von Sollwertparametern zum Steuern einer Hochspannungsgleichstromverbindung, HVDC-Verbindung, (10), die parallel mit einem Übertragungskorridor (11), der mindestens eine Wechselstromleitung, AC-Leitung, (12a-b) umfasst, vorgesehen ist, wobei die Sollwertbestimmungseinrichtung (1) Folgendes umfasst:
einen Prozessor (60) und
einen Speicher (64), der Anweisungen (67) speichert, die, wenn sie durch den Prozessor ausgeführt werden, die Sollwertbestimmungseinrichtung (1) veranlassen zum
Erhalten eines ersten Satzes von Messwerten eines ersten Endes des Übertragungskorridors;
Erhalten eines zweiten Satzes von Messwerten eines zweiten Endes des Übertragungskorridors;
Bestimmen desjenigen eines ersten Bereichs, der mit dem ersten Ende des Übertragungskorridors verbunden ist, und eines zweiten Bereichs, der mit dem zweiten Ende des Übertragungskorridors verbunden ist, der einen Wirkleistungsmangel aufweist, und desjenigen des ersten Bereichs und des zweiten Bereichs des Übertragungskorridors, der einen Wirkleistungsüberschuss aufweist;
Bestimmen eines Modellersatzschaltbilds auf der Grundlage eines Korridorersatzschaltbilds des Übertragungskorridors und eines Generatorersatzschaltbilds des Bereichs, der überwiegend als ein Generator arbeitet; und
Bestimmen von Sollwertparametern für die HVDC-Verbindung (10) auf der Grundlage des Modellersatzschaltbilds, was ein Herleiten einer Arbeitspunktfunktion des Übertragungskorridors, die die Beziehung zwischen Spannungs- und Leistungsübertragung beschreibt, umfasst, wobei die Sollwertparameter auf der Grundlage einer Leistungsmarge zwischen einem Leistungsübertragungswert eines aktuellen Arbeitspunkts und einem maximalen Leistungsübertragungswert bestimmt werden.

8. Sollwertbestimmungseinrichtung (1) nach Anspruch 7, wobei die Anweisungen, um Sollwertparameter zu bestimmen, Anweisungen (67) umfassen, die, wenn sie durch den Prozessor ausgeführt werden, die Sollwertbestimmungseinrichtung (1) veranlassen, eine Funktion *f(p,x,u),* die *g(p,x,u)* = *0* und *h(p,x,u)* ≤ *0 unterliegt,* zu optimieren, wobei *g* durch das T-Modell gegebene Abhängigkeiten und eine Beharrungszustandsantwort der HVDC-Verbindung repräsentiert, *h* Betriebsgrenzen der HVDC-Verbindung repräsentiert, *x* Zustandsvariablen des Modells repräsentiert, *u* die Sollwertparameter repräsentiert und *p* eine simulierte Lastschwankung repräsentiert.

9. Sollwertbestimmungseinrichtung (1) nach Anspruch 8, wobei die Anweisungen, um Sollwertparameter zu bestimmen, Anweisungen (67) umfassen, die, wenn sie durch den Prozessor ausgeführt werden, die Sollwertbestimmungseinrichtung (1) veranlassen, eine Leitungsstrecke im Übertragungskorridor (11) zu simulieren.

10. Sollwertbestimmungseinrichtung (1) nach einem der Ansprüche 7 bis 9, wobei die Sollwertparameter einen Wirkleistungsübertragungswert und einen Blindleistungsübertragungswert umfassen.

11. Sollwertbestimmungseinrichtung (1) nach einem der Ansprüche 7 bis 10, wobei das Korridorersatzschaltbild ein T-Ersatzschaltbild, ein ABCD-Ersatzschaltbild oder ein PI-Ersatzschaltbild ist.

12. Sollwertbestimmungseinrichtung (1) nach einem der Ansprüche 7 bis 11, wobei das Generatorersatzschaltbild ein Thevenin-Ersatzschaltbild oder ein Norton-Ersatzschaltbild ist.

13. Computerprogramm (67, 91) zum Bestimmen von Sollwertparametern zum Steuern einer Hochspannungsgleichstromverbindung, HVDC-Verbindung, (10), die parallel mit einem Übertragungskorridor (11), der mindestens eine Wechselstromleitung, AC-Leitung, (12a-b) umfasst, vorgesehen ist, wobei das Computerprogramm Computerprogrammcode umfasst, der, wenn er in einer Sollwertbestimmungseinrichtung (1) ausgeführt wird, die Sollwertbestimmungseinrichtung (1) veranlasst zum
Erhalten eines ersten Satzes von Messwerten eines ersten Endes des Übertragungskorridors;
Erhalten eines zweiten Satzes von Messwerten eines zweiten Endes des Übertragungskorridors;
Bestimmen desjenigen eines ersten Bereichs, der mit dem ersten Ende des Übertragungskorridors verbunden ist, und eines zweiten Bereichs, der mit dem zweiten Ende des Übertragungskorridors verbunden ist, der einen Wirkleistungsmangel aufweist, und desjenigen des ersten Bereichs und des zweiten Bereichs des Übertragungskorridors, der einen Wirkleistungsüberschuss aufweist;
Bestimmen eines Modellersatzschaltbilds auf der Grundlage eines Korridorersatzschaltbilds des Übertragungskorridors und eines Generatorersatzschaltbilds des Bereichs, der überwiegend als ein Generator arbeitet; und
Bestimmen von Sollwertparametern für die HVDC-Verbindung (10) auf der Grundlage des Modellersatzschaltbilds, was ein Herleiten einer Arbeitspunktfunktion des Übertragungskorridors, die die Beziehung zwischen Spannungs- und Leistungsübertragung beschreibt, umfasst, wobei die Sollwertparameter auf der Grundlage einer Leistungsmarge zwischen einem Leistungsübertragungswert eines aktuellen Arbeitspunkts und einem maximalen Leistungsübertragungswert bestimmt werden.

14. Computerprogrammprodukt (64, 90), das ein Computerprogramm nach Anspruch 13 und ein computerlesbares Mittel, in dem das Computerprogramm gespeichert ist, umfasst.

## Revendications

1. Procédé pour déterminer des paramètres de consigne pour commander une liaison à courant continu haute tension, CCHT, (10) prévue en parallèle avec un corridor de transmission (11) comprenant au moins une ligne à courant alternatif, c.a., (12a-b), ce procédé étant exécuté dans un dispositif de détermination de consigne (1) et comprenant les étapes consistant à :
obtenir (40) un premier ensemble de mesures d'une première extrémité du corridor de transmission ;
obtenir (42) un deuxième ensemble de mesures d'une deuxième extrémité du corridor de transmission ;
déterminer (44) laquelle parmi une première zone, connectée à la première extrémité du corridor de transmission, et une deuxième zone connectée à la deuxième extrémité du corridor de transmission, a un déficit de puissance active et laquelle parmi la première zone et la deuxième zone du corridor de transmission a un surplus de puissance active ;
déterminer (46) un équivalent de modèle, en se basant sur un équivalent de corridor du corridor de transmission et sur un équivalent de génératrice de la zone fonctionnant principalement comme une génératrice ; et à
déterminer (48) des paramètres de consigne pour la liaison CCHT (10) en se basant sur l'équivalent de modèle, qui comprend la déduction d'une fonction de point de fonctionnement du corridor de transmission, décrivant le rapport entre la tension et le transfert de puissance, et les paramètres de consigne étant déterminés en se basant sur une marge de puissance entre une valeur transfert de puissance d'un point de fonctionnement courant et une valeur de transfert de puissance maximum.

2. Procédé selon la revendication 1, dans lequel l'étape de détermination (48) des paramètres de consigne comprend l'optimisation d'une fonction *f(p, x, u),* sous réserve que *g(p, x, u)* = *0* et que *h(p, x, u)* ≤ *0*, *g* représentant des contraintes données par le modèle T et une réponse de régime permanent de la liaison CCHT, *h* représentant les limites de fonctionnement de la liaison CCHT, *x* représentant des variables d'état du modèle, *u* représentant les paramètres de consigne, et *p* représentant une variation de charge simulée.

3. Procédé selon la revendication 2, dans lequel l'étape de détermination (48) des paramètres de consigne comprend la simulation d'un déclenchement de ligne dans le corridor de transmission (11).

4. Procédé selon l'une quelconque des revendications précédentes, dans lequel les paramètres de consigne comprennent une valeur de transfert de puissance active et une valeur de transfert de puissance réactive.

5. Procédé selon l'une quelconque des revendications précédentes, dans lequel l'équivalent du corridor est un équivalent T, un équivalent ABCD ou un équivalent PI.

6. Procédé selon l'une quelconque des revendications précédentes, dans lequel l'équivalent de la génératrice est un équivalent Thevenin, ou un équivalent Norton.

7. Dispositif de détermination de consigne (1) pour déterminer des paramètres de consigne pour commander une liaison à courant continu haute tension, CCHT, (10) prévue en parallèle avec un corridor de transmission (11) comprenant au moins une ligne à courant alternatif, c.a., (12a-b), ce dispositif de détermination (1) comprenant :
un processeur (60) ; et
une mémoire (64) stockant des instructions (67) qui, lorsqu'elles sont exécutées par le processeur, font en sorte que le dispositif de détermination de consigne (1) :
obtienne un premier ensemble de mesures d'une première extrémité du corridor de transmission ;
obtienne un deuxième ensemble de mesures d'une deuxième extrémité du corridor de transmission ;
détermine laquelle parmi une première zone, connectée à la première extrémité du corridor de transmission, et une deuxième zone, connectée à la deuxième extrémité du corridor de transmission, a un déficit de puissance active et laquelle parmi la première zone et la deuxième zone du corridor de transmission a un surplus de puissance active ;
détermine un équivalent de modèle, en se basant sur un équivalent de corridor du corridor de transmission et sur un équivalent de génératrice de la zone fonctionnant principalement comme une génératrice ; et
détermine des paramètres de consigne pour la liaison CCHT (10) en se basant sur l'équivalent de modèle, qui comprend la déduction d'une fonction de point de fonctionnement du corridor de transmission, décrivant le rapport entre la tension et le transfert de puissance, et les paramètres de consigne étant déterminés en se basant sur une marge de puissance entre une valeur de transfert de puissance d'un point de fonctionnement courant et une valeur de transfert de puissance maximum.

8. Dispositif de détermination de consigne (1) selon la revendication 7, dans lequel les instructions pour déterminer des paramètres de consigne comprennent des instructions (67) qui, lorsqu'elles sont exécutées par le processeur, font en sorte que le dispositif de détermination de consigne (1) optimise une fonction *f(p, x, u),* sous réserve que *g(p, x, u)* = *0* et que *h(p*, *x, u)* ≤ *0, g* représentant des contraintes données par le modèle T et une réponse de régime permanent de la liaison CCHT, *h* représentant les limites de fonctionnement de la liaison CCHT, *x* représentant des variables d'état du modèle, *u* représentant les paramètres de consigne, et *p* représentant une variation de charge simulée.

9. Dispositif de détermination de consigne (1) selon la revendication 8, dans lequel les instructions pour déterminer les paramètres de consigne comprennent des instructions (67) qui, lorsqu'elles sont exécutées par le processeur, font en sorte que le dispositif de détermination de consigne (1) simule un déclenchement de ligne dans le corridor de transmission (11).

10. Dispositif de détermination de consigne (1) selon l'une quelconque des revendications 7 à 9, dans lequel les paramètres de consigne comprennent une valeur de transfert de puissance active et une valeur de transfert de puissance réactive.

11. Dispositif de détermination de consigne (1) selon l'une quelconque des revendications 7 à 10, dans lequel l'équivalent du corridor est un équivalent T, un équivalent ABCD ou un équivalent PI.

12. Dispositif de détermination de consigne (1) selon l'une quelconque des revendications 7 à 11, dans lequel l'équivalent de la génératrice est un équivalent Thevenin, ou un équivalent Norton.

13. Programme informatique (67, 91) pour déterminer des paramètres de consigne pour commander une liaison à courant continu haute tension, CCHT, (10) prévue en parallèle avec un corridor de transmission (11) comprenant au moins une ligne à courant alternatif, c.a., (12a-b), ce programme informatique comprenant un code de programme informatique qui, lorsqu'il est exécuté sur un dispositif de détermination de consigne (1) fait en sorte que ce dispositif de détermination de consigne (1) :
obtienne un premier ensemble de mesures d'une première extrémité du corridor de transmission ;
obtienne un deuxième ensemble de mesures d'une deuxième extrémité du corridor de transmission ;
détermine laquelle parmi une première zone, connectée à la première extrémité du corridor de transmission, et une deuxième zone connectée à la deuxième extrémité du corridor de transmission, a un déficit de puissance active et laquelle parmi la première zone et la deuxième zone du corridor de transmission a un surplus de puissance active ;
détermine un équivalent de modèle, en se basant sur un équivalent de corridor du corridor de transmission et sur un équivalent de génératrice de la zone fonctionnant principalement comme une génératrice ; et
détermine des paramètres de consigne pour la liaison CCHT (10) en se basant sur l'équivalent de modèle, qui comprend la déduction d'une fonction de point de fonctionnement du corridor de transmission, décrivant le rapport entre la tension et le transfert de puissance, et ces paramètres de consigne étant déterminés en se basant sur une marge de puissance entre une valeur de transfert de puissance d'un point de fonctionnement courant et une valeur de transfert de puissance maximum.

14. Progiciel (64, 90) comprenant un programme informatique selon la revendication 13 et un support lisible par ordinateur sur lequel ce programme informatique est stocké.
